# EUROPÄISCHE PATENTANMELDUNG

(11) **EP 4 691 951 A1**
(43) Veröffentlichungstag der Anmeldung: **11.02.2026**
(21) Anmeldenummer: 25192510.3
(22) Anmeldetag: 29.07.2025
(51) Int. Cl.: B65H 29/24, B65H 5/22, B65H 29/54

(54) **VORRICHTUNG UND VERFAHREN ZUM TRANSPORT UND VEREINZELN VON ZUSCHNITTEN EINER MATERIALBAHN**

(30) Priorität: 06.08.2024 DE 102024122364
(71) Anmelder: OPTIMA life science GmbH, 74523 Schwäbisch Hall (DE)
(72) Erfinder: Bay, Jochen, 74523 Schwäbisch Hall (DE)
(74) Vertreter: Patentanwälte Ruff, Wilhelm, Beier, Dauster & Partner mbB

(57) **Zusammenfassung**

Die Erfindung betrifft eine Vorrichtung (100) zum Transport und Vereinzeln von Zuschnitten (1010) einer Materialbahn (1000) mit einem Vakuumzylinder (8) zum Transport der Zuschnitte(1010), einem Vakuumtransportzylinder (7) zum Weitertransport der Zuschnitte (1010), wobei der Vakuumzylinder (8) und der Vakuumtransportzylinder (7) je mit einem eigenen, unabhängigen Antriebsmotor (84) ausgestattet sind, und mit einer Steuereinheit (9), mit welcher der Antriebsmotor (84) datenübertragungstechnisch verbunden ist. Erfindungsgemäß sind in der Steuereinheit (9) Geschwindigkeitsprofile für die Rotation des Vakuumzylinders (8) hinterlegt oder erzeugbar, und der Vakuumzylinder (8) ist mit einem Geschwindigkeitsprofil mit unterschiedlichen Rotationsgeschwindigkeiten (R) rotierbar.

Die Erfindung betrifft auch ein Verfahren zum Transport und Vereinzeln von Zuschnitten einer Materialbahn.

Vorrichtung und Verfahren ermöglichen eine schonendere und genauere Übergabe von Zuschnitten von einem Vakuumzylinder auf einen Vakuumtransportzylinder.

## Beschreibung

Die Erfindung betrifft eine Vorrichtung zum Transport und Vereinzeln von Zuschnitten einer Materialbahn mit einem Vakuumzylinder zum Transport der Zuschnitte, einem stromabwärtig dazu angeordneten Vakuumtransportzylinder zum Weitertransport der Zuschnitte, und mit einer weiter stromabwärtigen Übergabeebene zur Übernahme der Zuschnitte vom Vakuumtransportzylinder. Die Erfindung betrifft auch ein Verfahren zum Transport und Vereinzeln von Zuschnitten einer Materialbahn.

### Stand der Technik

Es ist bekannt, eine Membran-Elektroden-Anordnung (Engl. membrane electrode assembly, kurz MEA) oder Teile davon für eine Brennstoffzelle, eine Elektrolysezelle oder eine Redox Flow-Zelle (Flüssigbatterie) oder Membran-basierte Luftbefeuchter aus Materialbahnen herzustellen. Die MEA umfasst in Ausgestaltungen eine Katalysatorbeschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Für einen weiteren Aufbau können an Außenseiten der MEA zwei Gasdiffusionslagen (kurz GDL) angebracht werden. Ein Anbringen der GDL kann dabei in einem Prozess mit der Herstellung der MEA umfassend die CCM und den oder die Rahmen oder in einem räumlich und/oder zeitlich getrennten Prozess erfolgen. In einer anderen Ausgestaltung wird eine MEA umfassend eine Membran und zwei daran angeordnete Gasdiffusionslagen bereitgestellt, wobei an dieser MEA einseitig oder beidseitig Randverstärkungen oder Rahmen angebracht werden.

Um die einzelnen Komponenten bzw. Zuschnitte der MEA aneinander zu positionieren und miteinander zu verbinden ist es aus dem Stand der Technik bekannt, einzelne Komponenten aus Rollenmaterial auszustanzen, aufeinander abzulegen und zu laminieren. Für eine gute Wirksamkeit der MEA ist es erforderlich, dass die Komponenten exakt zueinander ausgerichtet und positioniert werden. Weiter wichtig ist es, die Komponenten möglichst schonend zu behandeln, da beispielsweise auf Katalysatorbeschichtete Membrane wirkende kleine Kräfte bereits Risse in der Mikrostruktur der Beschichtung hervorrufen können.

Weiterhin ist es aus dem Stand der Technik bekannt, die Komponenten der MEA auf Vakuumzylindern zu transportieren. Die Vakuumzylinder sind dazu an ihren Mantelflächen mit einer porösen oder löchrigen Oberfläche versehen, durch welche Unterdruck bereitgestellt wird. Um den Abstand von im Materialfluss auf einem Vakuumzylinder transportierten Komponenten bzw. Zuschnitte zu verändern, insbesondere zu vergrößern, um später eine einzelne Ablage und Positionierung auf anderen Komponenten zu ermöglichen, werden die Komponenten von einem langsamer rotierenden Vakuumzylinder auf einen schneller rotierenden Vakuumzylinder übergeben. Zu Beginn der Übergabe wird ein jeweiliger Zuschnitt überwiegend von dem ersten Vakuumzylinder angesaugt und gehalten. In einer späteren Phase der Übergabe wird der Zuschnitt überwiegend von dem zweiten Vakuumzylinder angesaugt und gehalten. Je weiter sich der Übertragungsprozess fortsetzt, umso mehr verlagert sich das Kräfteverhältnis zugunsten des nachfolgenden Zylinders. An dem Punkt, wo die Ansaugkräfte des zweiten Zylinders überwiegen, wird der Zuschnitt gegen die verbleibende Ansaugkraft von dem ersten Zylinder heruntergezogen.

Hierbei kommt es zu Schlupf, welcher zu einer Positionsungenauigkeit bei der Übertragung auf den zweiten Zylinder führt. Auch kann der Beschleunigungsvorgang im Schlupfprozess nicht genau vorherbestimmt werden, was ebenfalls die Positionsgenauigkeit verschlechtert. Gerade im Bereich der MEA-Fertigung bestehen hohe Anforderungen an die Genauigkeit von aufeinander abzulegenden MEA-Komponenten.

Ein weiterer negativer Nebeneffekt besteht darin, dass bei der Übergabe Kräfte auf die Zuschnitte wirken, die bei leicht dehnbaren Zuschnitten, nämlich bei MEA-Komponenten, insbesondere der CCM, zu einer Längung führen. In anderen Worten: Der zweite Zylinder zieht am vorderen Ende des Zuschnitts, der erste Zylinder hält den Zuschnitt zurück.

Nachteilig bei der bekannten Lösung ist also, dass zum einen bei der Übergabe vom ersten auf den zweiten Vakuumzylinder Kräfte auf die Komponenten wirken, welche diese beeinträchtigen oder gar beschädigen oder zerstören können. Zum anderen kommt es zu ungewünschtem Schlupf zwischen den Komponenten und der Oberflächen der Vakuumzylinder. Durch den Schlupf verlieren die Komponenten ihre definierte Position auf der Oberfläche der Vakuumzylinder, was eine spätere exakte Positionierung zu anderen Komponenten beeinträchtigt.

### Aufgabenstellung

Aufgabe der vorliegenden Erfindung ist es eine Vorrichtung zum Transport und zum Vereinzeln von Zuschnitten einer Materialbahn zu schaffen und ein Verfahren zum Transport und Vereinzeln von Zuschnitten einer Materialbahn zu beschreiben, welche eine möglichst schlupffreie und somit schonendere und genauere Übergabe von Zuschnitten von einem Vakuumzylinder auf einen Vakuumtransportzylinder ermöglichen und die Nachteile des Standes der Technik zumindest teilweise beheben.

### Technische Lösung

Gelöst wird diese Aufgabe durch eine Vorrichtung zum Transport und zum Vereinzeln von Zuschnitten einer Materialbahn wie sie nachfolgend beschrieben und beansprucht ist.

Erfindungsgemäß wurde als vorteilhaft erkannt, einen Vakuumzylinder mit einem Geschwindigkeitsprofil zu betreiben, das unterschiedliche Rotationsgeschwindigkeiten aufweist.

Die Vorrichtung dient zum Transport und Vereinzeln von Zuschnitten einer Materialbahn, insbesondere von MEA-Komponenten. Bei den Zuschnitten kann es sich alternativ auch beispielsweise um Wundlauflagen, Etiketten, Folien- oder Membranzuschnitte o.ä. handeln. Die Vorrichtung besitzt einen Vakuumzylinder zum Transport der Zuschnitte, einen stromabwärtig - in Transportrichtung der Materialbahn und der Zuschnitte gesehen - dazu angeordneten Vakuumtransportzylinder zum Weitertransport der Zuschnitte, und eine weiter stromabwärtige Übergabeebene zur Übernahme der Zuschnitte vom Vakuumtransportzylinder. Vereinzeln von Zuschnitten meint, dass diese einzeln abgelegt oder übergeben werden können. Gegebenenfalls kann auch der Abstand zwischen zwei aufeinanderfolgenden Zuschnitten vergrößert werden, insbesondere dann, wenn die Zuschnitte direkt aneinander angrenzend ohne Abstand dem Vakuumzylinder zugeführt werden. Erfindungsgemäß sind der Vakuumzylinder und der Vakuumtransportzylinder je mit einem eigenen, unabhängigen Antriebsmotor zu deren Rotationsantrieb ausgestattet. Weiterhin verfügt die Vorrichtung über eine Steuereinheit, wobei zumindest der Antriebsmotor des Vakuumzylinders mit der Steuereinheit datenübertragungstechnisch verbunden ist zur Ansteuerung des Antriebsmotors. In der Steuereinheit sind Geschwindigkeitsprofile für die Rotation des Vakuumzylinders hinterlegt oder erzeugbar, d.h. berechenbar. Der Antriebsmotor des Vakuumzylinder wird so angesteuert, dass der Vakuumzylinder während einer jeweiligen Umdrehung mit einem Geschwindigkeitsprofil mit unterschiedlichen Rotationsgeschwindigkeiten rotiert wird. In anderen Worten: der Vakuumzylinder wird während seiner Rotation gezielt beschleunigt, abgebremst oder kurzzeitig ganz angehalten. In vorteilhafter Weise kann so Einfluss genommen werden auf den Schlupf bei der Übergabe eines Zuschnitts von dem Vakuumzylinder auf den Vakuumtransportzylinder und kann erforderlichenfalls der Abstand zwischen zwei Zuschnitten vor und nach der Übergabe verändert werden.

Es wurde bei Versuchen herausgefunden, dass Geschwindigkeitsprofile, welche abhängig von der Flächenverteilung über die Länge eines jeweiligen Zuschnitts sind, eine optimierte Übergabe ermöglichen.

In Ausgestaltungen ist vorgesehen, dass die Geschwindigkeitsprofile gleiche Oberflächengeschwindigkeiten von Vakuumzylinder und Vakuumtransportzylinder bei Beginn der Übergabe eines jeweiligen Zuschnitts bewirken und die Rotationsgeschwindigkeit des Vakuumzylinders reduzieren, sobald mindestens 50%, insbesondere mindestens 65% der Fläche eines jeweiligen Zuschnitts an den Vakuumtransportzylinder übergeben sind.

In Weiterbildung der erfindungsgemäßen Vorrichtung ist diese mit einer Einrichtung zur Materialbahnzuführung zum Transport einer Materialbahn, mit einem Stanzzylinder und einem Gegenstanzzylinder zum Stanzen von Zuschnitten aus der Materialbahn stromaufwärtig des Vakuumzylinders und/ oder des Vakuumtransportzylinders ausgestattet. Der Stanzzylinder ist auf der einen Seite der Materialbahn und der Gegenstanzzylinder auf der anderen Seite der Materialbahn angeordnet, derart, dass die Materialbahn zwischen beiden hindurchführbar ist und dabei gestanzt werden kann. Auch Ausschnitte, also Zuschnitte, welche von einem Stanzrest umrandet sind, werden hier als Zuschnitte bezeichnet. Die Einrichtung zur Materialbahnzuführung, der Stanz- und der Gegenstanzzylinder sind je mit einem eigenen, unabhängigen Antriebsmotor zu deren Rotationsantrieb ausgestattet.

Gemäß einer ersten Variante ist die Materialbahn zumindest einlagig und weist eine Produktlage ohne Trägerlage auf und der Vakuumzylinder wird durch den Stanzzylinder oder den Gegenstanzzylinder gebildet. Eine Produktlage, welche von Stanzzylinder und Gegenstanzzylinder gestanzt wird, kann mehrere Schichten aufweisen. In vorteilhafter Weise wird bei dieser Variante ein besonders kompakter Aufbau der Vorrichtung ermöglicht.

Gemäß einer zweiten Variante ist die Materialbahn mehrlagig mit zumindest einer Trägerlage und einer Produktlage und die Vorrichtung besitzt eine Delaminiereinheit zum Trennen der Trägerlage von den Zuschnitten die auf dem Vakuumzylinder fixiert sind. Dank der Trägerlage können besonders empfindliche und / oder labile Produktlagen transportiert und bearbeitet werden. Eine Produktlage, welche von Stanzzylinder und Gegenstanzzylinder gestanzt wird, kann mehrere Schichten aufweisen.

Bei beiden Varianten kann die Vorrichtung eine Einrichtung zum Abtransport der Stanzreste und ggfs. der von den Zuschnitten befreiten Trägerlage besitzen.

In vorteilhafter Weiterbildung der Vorrichtung ist zumindest der Vakuumtransportzylinder mit einer haftungsoptimierten, nämlich haftungsverstärkende Oberfläche ausgestattet, derart, dass die Oberfläche eine gute Anhaftung der Zuschnitte ermöglicht. So wird in vorteilhafter Weise auch dann eine ausreichende Haftung gewährleistet, wenn diese nicht schon Dank den Materialeigenschaften der Zylindermantelfläche gewährleistet ist. Durch die haftungsverstärkende Oberfläche kann sichergestellt werden, dass Schlupf bei der Übergabe der Zuschnitte vom Vakuumzylinder auf den Vakuumtransportzylinder vermieden oder zumindest reduziert wird. Die Zuschnitte können so ohne Beeinträchtigung ihrer Position übergeben werden.

In möglicher Ausgestaltung der Vorrichtung kann die Übergabeebene über ein umlaufendes Transportband verfügen oder ein Transportsystem mit Produktaufnahmen zum Weitertransport der Zuschnitte oder kann in der Übergabeebene eine Produktbahn geführt sein, jeweils zur positionsgenauen Aufnahme der Zuschnitte von dem Vakuumtransportzylinder. Das Transportsystem mit Produktaufnahmen kann beispielsweise als Kette mit Mitnehmern und Auflagetabletts oder als Linearsystem mit Movern ausgestaltet sein.

Es wurde festgestellt, dass eine Ausbildung des Vakuumzylinders vorteilhaft ist, bei welcher nicht auf der gesamten Mantelfläche Unterdruck anliegt. Vielmehr können drucklose Segmente oder auch mit Überdruck, also Blasluft beaufschlagte Bereiche vorgesehen sein. So kann ein Lösen der Zuschnitte vom Vakuumzylinder bei der Übergabe der Zuschnitte unterstützt werden. Besonders vorteilhaft ist es, wenn der Vakuumzylinder einen Winkelbereich aufweist, in welchem die Mantelfläche mit Unterdruck beaufschlagt wird, und dieser Winkelbereich verstellbar ist. In anderen Worten: durch eine rotative Verstellbewegung des Winkelbereichs um die Rotationsachse des Vakuumzylinders kann die Zeitdauer von auf einen jeweiligen Zuschnitt wirkenden Vakuums relativ zum Drehwinkel des Vakuumzylinders festgelegt werden. So kann beispielsweise erreicht werden, dass das auf einen Zuschnitt wirkende Vakuum im Übergabebereich, d.h. im Walzenspalt von Vakuumzylinder und Vakuumtransportzylinder früher oder später beendet werden kann.

Die Erfindung betrifft auch ein Verfahren zum Transport und Vereinzeln von Zuschnitten einer Materialbahn wie es nachfolgend beschrieben und beansprucht ist und insbesondere auf einer wie vorstehend beschriebenen Vorrichtung ausgeführt werden kann.

Das Verfahren dient zum Transport und Vereinzeln von Zuschnitten einer Materialbahn, insbesondere von Komponenten einer MEA, mit folgenden sich kontinuierlich widerholenden Schritten:
a) Zuführen einer Materialbahn mit Zuschnitten
b) Transport der Zuschnitte auf einem Vakuumzylinder
c) Übergabe der Zuschnitte auf einen Vakuumtransportzylinder und Transport der Zuschnitte auf dem Vakuumtransportzylinder
d) Übergabe der Zuschnitte an eine Übergabeebene
wobei in Schritt c) der Vakuumzylinder mit einem Geschwindigkeitsprofil betrieben wird, das unterschiedliche Rotationsgeschwindigkeiten aufweist und während der Übergabe eines jeweiligen Zuschnitts an den Vakuumtransportzylinder die Rotationsgeschwindigkeit des Vakuumzylinders eine Änderung erfährt, insbesondere eine Reduktion.

In vorteilhafter Weiterbildung des Verfahrens ist das Geschwindigkeitsprofil derart ausgestaltet, dass bei Beginn der Übergabe eines jeweiligen Zuschnitts Vakuumzylinder und Vakuumtransportzylinder mit gleichen Oberflächengeschwindigkeiten rotiert werden, d.h. dann wenn die Vorderkante eines jeweiligen Zuschnitts den Übergabebereich, also den Walzenspalt von Vakuumzylinder und Vakuumtransportzylinder erreicht. Hierbei kann auch vom Synchronlauf von Vakuumzylinder und Vakuumtransportzylinder gesprochen werden. Das Geschwindigkeitsprofil ist weiter derart ausgestaltet, dass die Rotationsgeschwindigkeit des Vakuumzylinders reduziert wird, sobald mindestens 50%, insbesondere mindestens 65% der Fläche eines jeweiligen Zuschnitts von dem Vakuumzylinder an den Vakuumtransportzylinder übergeben ist und von diesem gehalten wird. Durch die überwiegende Übertragung bei gleichen Oberflächengeschwindigkeiten wird in vorteilhafter Weise sichergestellt, dass die Zuschnitte positionsgenau übertragen werden können, ihre Orientierung nicht verlieren und keine Dehnung erfahren. Durch die späte Reduktion der Drehgeschwindigkeit des Vakuumzylinders wird in vorteilhafter Weise ermöglicht, den Abstand zwischen zwei aufeinander folgenden Zuschnitten zu verändern, ohne dass es zu nennenswertem nachteiligem Schlupf zwischen Zuschnitten und Vakuumzylinder bzw. Vakuumtransportzylinder kommt.

Besonders vorteilhaft erscheint es, wenn der Vakuumtransportzylinder mit konstanter Rotationsgeschwindigkeit bewegt wird, da dann eine besonders exakte Übergabe und Positionierung der Zuschnitte in der stromabwärtigen Übergabeebene unterstützt wird.

Wenn auch das sich in der Übergabeebene befindliche umlaufende Transportband oder die sich in der Übergabeebene befindliche Produktbahn mit konstanter und gleicher Geschwindigkeit wie der Vakuumtransportzylinder bewegen, kann eine hochpositionsgenaue Ablage der Zuschnitte erreicht werden.

Konstante Geschwindigkeit meint hier nicht, dass die Geschwindigkeit unveränderlich ist. Vielmehr ist gemeint, dass sich die Geschwindigkeit nicht permanent ändert, also kaum Beschleunigungen oder Abbremsungen vorliegen, sodass ein kontinuierlicher Fertigungsprozess ermöglicht wird. Soll - z-B. mit der Zielsetzung einer höheren Ausbringung - die Geschwindigkeit des sich in der Übergabeebene befindlichen umlaufenden Transportbands oder der sich in der Übergabeebene befindlichen Produktbahn erhöht werden, oder soll - z.B. wegen eines erforderlichen Rollenwechsels oder einer temporär langsamer arbeitenden inline vorgeschalteten Produktionsanlage - die Geschwindigkeit des sich in der Übergabeebene befindlichen umlaufenden Transportbands oder der sich in der Übergabeebene befindlichen Produktbahn verringert werden so müssen die Geschwindigkeit der anderen Elemente der Vorrichtung, also Vakuumzylinder, Vakuumtransferzylinder, etc. in ihren Geschwindigkeiten entsprechend angepasst werden.

In einer ersten Variante des Verfahrens kann in Weiterbildung ein zusätzlicher Schritt vor dem Transport der Zuschnitte auf einem Vakuumzylinder vorgesehen sein: Ausstanzen von Zuschnitten, insbesondere durch das Zusammenwirken von Stanzzylinder und Gegenstanzzylinder wobei die Materialbahn einlagig ist und der Vakuumzylinder durch den Stanzzylinder oder den Gegenstanzzylinder gebildet werden kann.

In einer zweiten Variante des Verfahrens kann in Weiterbildung ein zusätzlicher Schritt vor dem Transport der Zuschnitte auf einem Vakuumzylinder vorgesehen sein: Ausstanzen von Zuschnitten, insbesondere durch das Zusammenwirken von Stanzzylinder und Gegenstanzzylinder, wobei die Materialbahn mehrlagig ist mit zumindest einer Trägerlage und einer Produktlage und nach dem Ausstanzen ein Delaminieren erfolgt zum Trennen der Zuschnitte von der Trägerlage.

Bei beiden Verfahrensvarianten kann nach dem Ausstanzen ein Abtransport der Stanzreste und ggfs. der Trägerlage erfolgen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erste Ausführungsform einer Vorrichtung zum Transport und Vereinzeln von Zuschnitten
- Fig. 2a und b: eine zweite Ausführungsform einer Vorrichtung zum Transport und Vereinzeln von Zuschnitten einer einlagigen Materialbahn mit zwei Untervarianten
- Fig. 3: eine dritte Ausführungsform einer Vorrichtung zum Transport und Vereinzeln von Zuschnitten einer mehrlagigen Materialbahn
- Fig. 4: eine Detailansicht des Vakuumzylinders und des Vakuumtransportzylinders
- Fig. 5: eine Schnittdarstellung einer mehrlagigen Materialbahn
- Fig. 6: einen Zuschnitt in einer Draufsicht.

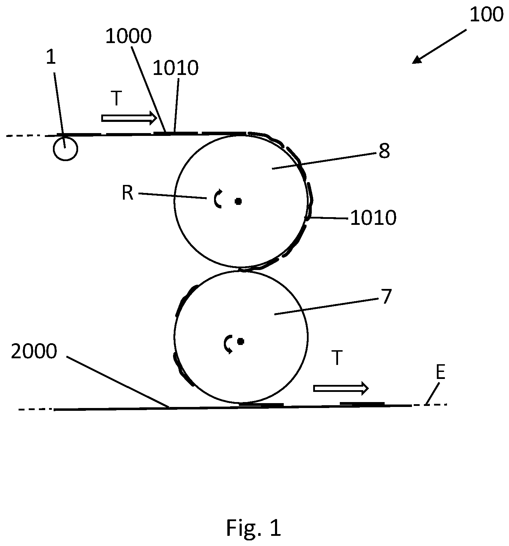

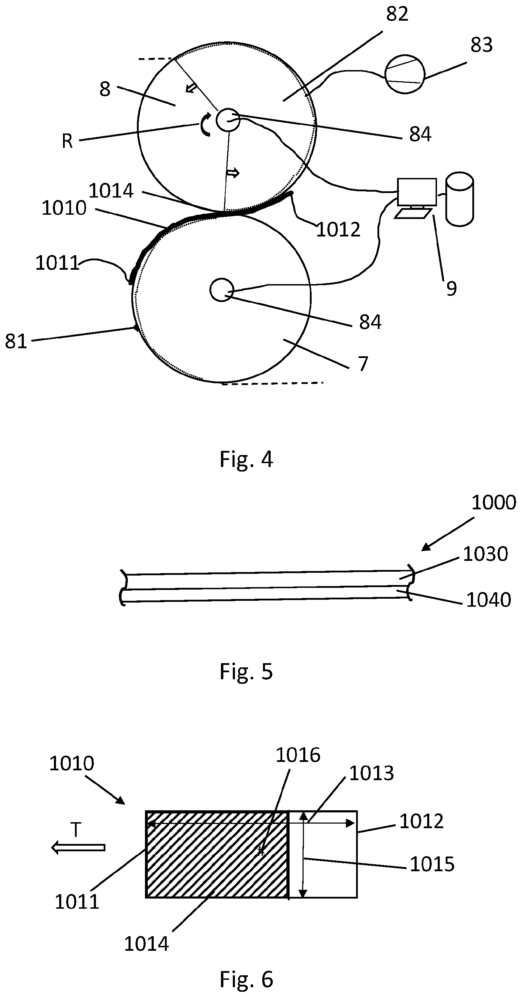

Fig. 1 zeigt eine erste Ausführungsform einer Vorrichtung 100 zum Transport einer Materialbahn 1000 bestehend aus aneinandergereihten Zuschnitten 1010 und dient dem Vereinzeln der Zuschnitte 1010. Die Vorrichtung 100 ist mit einer Einrichtung 1 zur Materialbahnzuführung zum Transport der Materialbahn 1000, einem Vakuumzylinder 8 zum Transport der Zuschnitte 1010, einem - in Transportrichtung T gesehen - stromabwärtig dazu angeordneten Vakuumtransportzylinder 7 zum Weitertransport der Zuschnitte 1010 und mit einer weiter stromabwärtigen Übergabeebene E zur Übernahme der Zuschnitte 1010 vom Vakuumtransportzylinder 7 ausgestattet. In den Figuren sind nur einzelne Zuschnitte 1010 beispielhaft dargestellt. Der Vakuumzylinder 8 und der Vakuumtransportzylinder 7 sind je mit einem eigenen, unabhängigen Antriebsmotor 84 ausgestattet (hier nicht dargestellt) und der Vakuumzylinder 8 wird mit einem Geschwindigkeitsprofil mit unterschiedlichen Rotationsgeschwindigkeiten R rotiert. Dank des Geschwindigkeitsprofils kann die Übergabe der Zuschnitte von dem Vakuumzylinder 8 auf den Vakuumtransportzylinder 7 optimiert werden und der Abstand zwischen den Zuschnitten 1010 wird vergrößert. Die Übergabe der Zuschnitte 1010 wird anhand von Fig. 4 näher erläutert. In der Übergabeebene E ist eine Produktbahn 2000 geführt zur Aufnahme der Zuschnitte 1010 von dem Vakuumtransportzylinder 7.

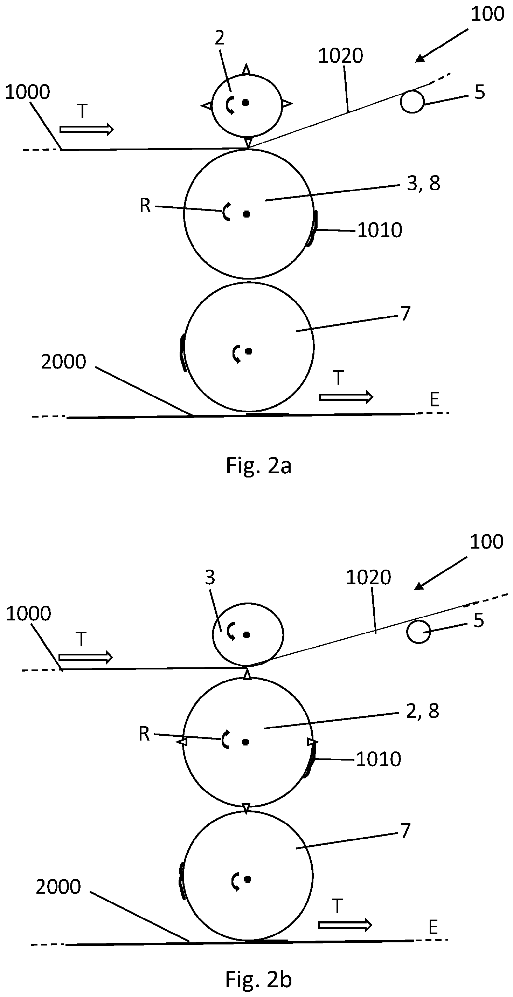

Fig. 2a und b zeigen eine zweite Ausführungsform einer Vorrichtung zum Transport und Vereinzeln von Zuschnitten einer einlagigen Materialbahn 1000 in zwei Teilvarianten a) und b).

Die Vorrichtung 100 ist mit einem Stanzzylinder 2 und einem Gegenstanzzylinder 3 zum Stanzen von Zuschnitten 1010 aus der Materialbahn 1000 ausgestattet, welche stromaufwärtig des Vakuumtransportzylinders 7 angeordnet sind. Der Vakuumzylinder 8 wird bei Variante a) durch den Gegenstanzzylinder 3 und in Variante b) durch den Stanzzylinder 2 gebildet und verfügt über einen eigenen, unabhängigen Antriebsmotor. Eine Einrichtung 1 zur Materialbahnzuführung ist hier sowie in der nachfolgend beschriebenen Figur zwecks besserer Übersichtlichkeit nicht dargestellt. Stromabwärtig des Stanzzylinders 2 ist eine Einrichtung 5 zum Abtransport der Stanzreste 1020 angeordnet.

Der Stanz bzw. Gegenstanz- und Vakuumzylinder 2 bzw. 3 und 8 wird mit einem Geschwindigkeitsprofil mit unterschiedlichen Rotationsgeschwindigkeiten R rotiert. Dank des Geschwindigkeitsprofils kann die Übergabe der Zuschnitte 1010 von dem Vakuumzylinder 8 auf den Vakuumtransportzylinder 7 optimiert werden. Die Übergabe der Zuschnitte 1010 wird anhand von Fig. 4 näher erläutert. In der Übergabeebene E ist eine Produktbahn 2000 geführt zur Aufnahme der Zuschnitte 1010 von dem Vakuumtransportzylinder 7.

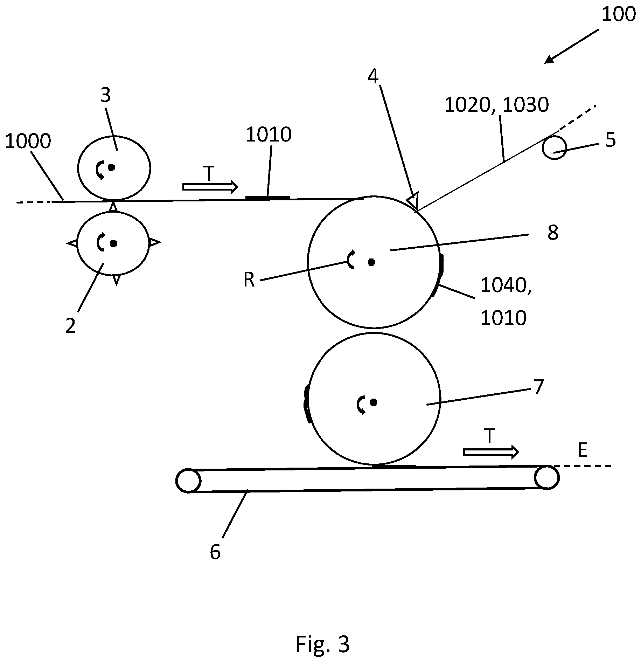

Fig. 3 zeigt eine dritte Ausführungsform einer Vorrichtung zum Transport und Vereinzeln von Zuschnitten, welche ähnlich aufgebaut ist wie die in Fig. 2 dargestellte Vorrichtung 100. Im Unterschied ist die Materialbahn 1000 mehrlagig mit zumindest einer Trägerlage 1030 und einer Produktlage 1040. Stromabwärtig des Stanzzylinders 2 besitzt die Vorrichtung eine Delaminiereinheit 4 zum Trennen der Zuschnitte 1010 von der Trägerlage 1030.

Weiterhin ist eine Einrichtung 5 zum Abtransport der Stanzreste 1020 und der Trägerlage 1030 vorgesehen.

Der Vakuumzylinder 8 wird auch hier mit einem Geschwindigkeitsprofil mit unterschiedlichen Rotationsgeschwindigkeiten R rotiert. Dank des Geschwindigkeitsprofils kann die Übergabe der Zuschnitte 1010 von dem Vakuumzylinder 8 auf den Vakuumtransportzylinder 7 optimiert werden. Die Übergabe der Zuschnitte 1010 wird anhand von Fig. 4 näher erläutert.

Im weiteren Unterschied zu den vorstehend beschriebenen Ausführungsformen verfügt die Übergabeebene E über ein Transportband 6 zum Weitertransport der Zuschnitte 1010.

Fig. 4 zeigt eine Detailansicht des Vakuumzylinders und des Vakuumtransportzylinders.

Wie schon vorstehend ausgeführt sind der Vakuumzylinder 8 und der Vakuumtransportzylinder 7 je mit einem eigenen, unabhängigen Antriebsmotor 84 ausgestattet, sodass der Vakuumzylinder 8 mit einem Geschwindigkeitsprofil mit unterschiedlichen Rotationsgeschwindigkeiten R rotiert werden kann.

Teil der Vorrichtung 100 ist auch eine Steuereinheit 9, mit welcher zumindest der Antriebsmotor 84 des Vakuumzylinders 8 datenübertragungstechnisch verbunden ist und angesteuert werden kann. In der Steuereinheit 9 sind Geschwindigkeitsprofile für die Rotation des Vakuumzylinders 8 hinterlegt oder erzeugbar, welche abhängig von der Länge 1013 und/oder der Flächenverteilung über die Länge 1013 eines jeweiligen Zuschnitts 1010 sind, vgl. Fig. 6 zur Erläuterung.

Das Geschwindigkeitsprofils ist dabei derart, dass gleiche Oberflächengeschwindigkeiten von Vakuumzylinder 8 und Vakuumtransportzylinder 7 bei Beginn der Übergabe eines jeweiligen Zuschnitts 1010 bewirkt werden, also dann, wenn die Vorderkante 1011 des Zuschnitts 1010 im Walzenspalt von Vakuumzylinder 8 und Vakuumtransportzylinder 7 vom Vakuumzylinder 8 an den Vakuumtransportzylinder 7 übergeben wird. Das Geschwindigkeitsprofil ist weiter dergestalt, dass die Rotationsgeschwindigkeit R des Vakuumzylinders 8 reduziert wird, sobald mindestens 50%, insbesondere mindestens 65% der Fläche 1016 eines jeweiligen Zuschnitts 1010 an den Vakuumtransportzylinder 7 übergeben sind.

Der Vakuumzylinder 8 ist mit einer haftungsoptimierten Oberfläche 81 ausgestattet, um die Anhaftung der Zuschnitte zu verbessern und Schlupf bei der Übergabe zwischen den Zylindern zu reduzieren.

Der Vakuumzylinder 8 kann einen verstellbaren Winkelbereich 82 aufweisen, in welchem die Mantelfläche des Vakuumzylinders 8 mit Unterdruck beaufschlagt wird. Wie durch Doppelpfeile angedeutet kann der Winkelbereich 82 in seiner Lage verdreht werden, wird dabei jedoch nicht vergrößert oder verkleinert.

Fig. 5 zeigt eine Schnittdarstellung einer mehrlagigen Materialbahn 1000 mit zumindest einer Trägerlage 1030 und einer Produktlage 1040, wobei die Zuschnitte 1010 aus der Produktlage 1040 gebildet werden bzw. ausgestanzt werden können. Die Produktlage 1040 kann mehrere Schichten aufweisen, welche hier nicht dargestellt sind.

Fig. 6 zeigt einen Zuschnitt in einer Draufsicht mit den Abmaßen eines Zuschnitts 1010.

Von der Vorderkante 1011 bis zur Hinterkante 1012 hat ein Zuschnitt eine Länge 1013. Der Zuschnitt 1010 hat eine Breite 1015. Die Fläche des Zuschnitts, als Produkt von Länge 1013 und Breite 1015 ist mit 1016 markiert. Eine Teilfläche 1014, welche 2/3 des vorderen Bereichs des Zuschnitts 1010 einnimmt, also mehr als 65% von dessen Gesamtfläche, ist zur Verdeutlichung mit einer Schraffierung versehen.

## Patentansprüche

1. Vorrichtung (100) zum Transport und Vereinzeln von Zuschnitten (1010) einer Materialbahn (1000) mit einem Vakuumzylinder (8) zum Transport der Zuschnitte (1010),
einem stromabwärtig dazu angeordneten Vakuumtransportzylinder (7) zum Weitertransport der Zuschnitte (1010),
mit einer weiter stromabwärtigen Übergabeebene (E) zur Übernahme der Zuschnitte (1010) vom Vakuumtransportzylinder (7),
wobei der Vakuumzylinder (8) und der Vakuumtransportzylinder (7) je mit einem eigenen, unabhängigen Antriebsmotor (84) ausgestattet sind,
und mit einer Steuereinheit (9),
wobei der Antriebsmotor (84) des Vakuumzylinders (8) mit der Steuereinheit (9) datenübertragungstechnisch verbunden ist und
in der Steuereinheit (9) Geschwindigkeitsprofile für die Rotation des Vakuumzylinders (8) hinterlegt oder erzeugbar sind, und der Vakuumzylinder (8) mit einem Geschwindigkeitsprofil mit unterschiedlichen Rotationsgeschwindigkeiten (R) rotierbar ist, um den Vakuumzylinder (8) während seiner Rotation gezielt zu beschleunigen, abzubremsen und/oder kurzzeitig anzuhalten.

2. Vorrichtung nach Anspruch 1
**dadurch gekennzeichnet, dass**
die Geschwindigkeitsprofile abhängig von der Flächenverteilung über die Länge (1013) eines jeweiligen Zuschnitts (1010) sind, und / oder
dass die Geschwindigkeitsprofile gleiche Oberflächengeschwindigkeiten von Vakuumzylinder (8) und Vakuumtransportzylinder (7) bei Beginn der Übergabe eines jeweiligen Zuschnitts (1010) bewirken und die Rotationsgeschwindigkeit (R) des Vakuumzylinders (8) reduzieren, sobald mindestens 50%, insbesondere mindestens 65% der Fläche (1016) eines jeweiligen Zuschnitts (1010) an den Vakuumtransportzylinder (7) übergeben sind.

3. Vorrichtung nach einem der vorangehenden Ansprüche,
**dadurch gekennzeichnet, dass**
die Vorrichtung (100) mit einer Einrichtung (1) zur Materialbahnzuführung zum Transport einer Materialbahn (1000), einem Stanzzylinder (2) und einem Gegenstanzzylinder (3) zum Stanzen von Zuschnitten (1010) aus der Materialbahn (1000) stromaufwärtig des Vakuumzylinders (8) und/ oder des Vakuumtransportzylinders (7) ausgestattet ist, und dass die Einrichtung (1) zur Materialbahnzuführung, der Stanz- und-Gegenstanzzylinder (7, 8) je mit einem eigenen, unabhängigen Antriebsmotor ausgestattet sind.

4. Vorrichtung nach Anspruch 3
**dadurch gekennzeichnet, dass**
die Materialbahn (1000) einlagig ist und der Vakuumzylinder (8) durch den Stanzzylinder (2) oder den Gegenstanzzylinder (3) gebildet wird.

5. Vorrichtung nach einem der Ansprüche 1 bis 3,
**dadurch gekennzeichnet, dass**
die Materialbahn (1000) mehrlagig ist mit zumindest einer Trägerlage (1030) und einer Produktlage (1040) und die Vorrichtung eine Delaminiereinheit (4) zum Trennen der Zuschnitte (1010) von der Trägerlage (1030) besitzt.

6. Vorrichtung nach einem der vorangehenden Ansprüche,
**dadurch gekennzeichnet, dass**
die Vorrichtung (100) eine Einrichtung (5) zum Abtransport der Stanzreste (1020) und ggfs. der Trägerlage (1030) besitzt.

7. Vorrichtung nach einem der vorangehenden Ansprüche,
**dadurch gekennzeichnet, dass**
der Vakuumtransportzylinder (7) mit einer haftungsoptimierten Oberfläche (81) ausgestattet ist.

8. Vorrichtung nach einem der vorangehenden Ansprüche,
**dadurch gekennzeichnet, dass**
die Übergabeebene (E) über ein Transportband (6) oder ein Transportsystem mit Produktaufnahmen verfügt zum Weitertransport der Zuschnitte (1010) oder,
dass in der Übergabeebene (E) eine Produktbahn (2000) geführt ist zur Aufnahme der Zuschnitte (1010).

9. Vorrichtung nach einem der vorangehenden Ansprüche,
**dadurch gekennzeichnet, dass**
der Vakuumzylinder (8) einen Winkelbereich (82) aufweist, in welchem die Mantelfläche mit Unterdruck beaufschlagt wird, und dieser Winkelbereich (82) verstellbar ist.

10. Verfahren zum Transport und Vereinzeln von Zuschnitten (1010) einer Materialbahn (1000) mit folgenden Schritten:
a) Zuführen einer Materialbahn (1000) mit Zuschnitten (1010)
b) Transport der Zuschnitte (1010) auf einem Vakuumzylinder (8)
c) Übergabe der Zuschnitte (1010) auf einen Vakuumtransportzylinder (7) und Transport der Zuschnitte (1010) auf dem Vakuumtransportzylinder (7)
d) Übergabe der Zuschnitte (1010) an eine Übergabeebene (E)
wobei in Schritt c) der Vakuumzylinder (8) mit einem Geschwindigkeitsprofil betrieben wird, das unterschiedliche Rotationsgeschwindigkeiten (R) aufweist und während der Übergabe eines jeweiligen Zuschnitts (1010) an den Vakuumtransportzylinder (7) die Rotationsgeschwindigkeit (R) des Vakuumzylinders (8) eine Änderung erfährt, insbesondere eine Reduktion.

11. Verfahren nach Anspruch 10,
**dadurch gekennzeichnet, dass**
das Geschwindigkeitsprofil gleiche Oberflächengeschwindigkeiten von Vakuumzylinder (8) und Vakuumtransportzylinder (7) bei Beginn der Übergabe eines jeweiligen Zuschnitts (1010) bewirkt und die Rotationsgeschwindigkeit (R) des Vakuumzylinders (8) reduziert wird, sobald mindestens 50%, insbesondere mindestens 65% der Fläche (1016) eines jeweiligen Zuschnitts (1010) an den Vakuumtransportzylinder (7) übergeben sind.

12. Verfahren nach einem der Ansprüche 10 - 11
**dadurch gekennzeichnet, dass**
der Vakuumtransportzylinder (7) mit konstanter Rotationsgeschwindigkeit (R) bewegt wird.

13. Verfahren nach einem der Ansprüche 10 - 12
mit dem zusätzlichen Schritt vor Schritt b) : Ausstanzen von Zuschnitten (1010), insbesondere durch das Zusammenwirken von Stanzzylinder (2) und Gegenstanzzylinder (3) wobei die Materialbahn (1000) einlagig ist und der Vakuumzylinder (8) durch den Stanzzylinder (2) oder den Gegenstanzzylinder (3) gebildet wird.

14. Verfahren nach einem der Ansprüche 10 - 12
mit dem zusätzlichen Schritt vor Schritt b) : Ausstanzen von Zuschnitten (1010), insbesondere durch das Zusammenwirken von Stanzzylinder (2) und Gegenstanzzylinder (3), wobei die Materialbahn (1000) mehrlagig ist mit zumindest einer Trägerlage (1030) und einer Produktlage (1040) und wobei nach dem Ausstanzen ein Delaminieren erfolgt zum Trennen der Zuschnitte (1010) von der Trägerlage (1030).

15. Verfahren nach einem der Ansprüche 9 - 14
**dadurch gekennzeichnet, dass**
nach dem Ausstanzen ein Abtransport der Stanzreste (1020) und ggfs. der Trägerlage (1030) erfolgt.
